# EUROPÄISCHE PATENTSCHRIFT

(11) **EP 4 313 470 B1**
(45) Veröffentlichungstag und Bekanntmachung des Hinweises auf die Patenterteilung: **09.10.2024**
(21) Anmeldenummer: 22718154.2
(22) Anmeldetag: 24.03.2022
(51) Int. Cl.: B23K 26/0622, B23K 26/08, B23K 26/402, B23K 26/38, H01L 31/18, B23K 26/40, B23K 101/18, B23K 103/02, B23K 103/08, B23K 103/00

(54) **VERFAHREN UND VORRICHTUNG ZUM SCHNEIDEN EINER METALLHALTIGEN FOLIE, UND LASER-GESCHNITTENE METALLHALTIGE FOLIE**
METHOD AND DEVICE FOR CUTTING A METAL-CONTAINING FOIL, AND LASER-CUT METAL-CONTAINING FOIL
PROCÉDÉ ET DISPOSITIF DE DÉCOUPE D'UNE FEUILLE CONTENANT DU MÉTAL, ET FILM CONTENANT DU MÉTAL DÉCOUPÉ AU LASER

(30) Priorität: 25.03.2021 DE 102021202964
(43) Veröffentlichungstag der Anmeldung: 07.02.2024
(73) Patentinhaber: Fraunhofer-Gesellschaft zur Förderung der angewandten Forschung e.V., 80686 München (DE)
(72) Erfinder: ECKL, Maximilian Josef, 01277 Dresden (DE); MÄDER, Gerrit, 01277 Dresden (DE); ROCH, Julius, 01277 Dresden (DE); THÜMMLER, Philipp, 01277 Dresden (DE); ABENDROTH, Thomas, 01277 Dresden (DE)
(74) Vertreter: Pfenning, Meinig & Partner mbB
(86) Internationale Anmeldenummer: PCT/EP2022/057804
(87) Internationale Veröffentlichungsnummer: WO 2022/200516

(56) Entgegenhaltungen:
- DE-A1- 102019 110 375
- US-A1- 2001 021 845
- US-A1- 2019 093 185

## Beschreibung

Es wird ein Verfahren und eine Vorrichtung zum Schneiden einer Folie, die mindestens eine Schicht aus Metall (insbesondere: Lithium) enthält oder daraus besteht, bereitgestellt. Das Verfahren und die Vorrichtung zeichnen sich dadurch aus, dass ein Laser zum Schneiden der Folie und/oder ein Mittel zum Positionieren einer Folie so gesteuert werden, dass gepulste Laserstrahlung, die der Laser in Richtung einer von dem Mittel zum Positionieren einer Folie positionierten Folie strahlt, die mindestens eine Schicht aus Metall der Folie auf eine Art und Weise durchschneidet, dass das Metall der Folie hauptsächlich sublimiert und kaum schmilzt. Mit dem Verfahren und der Vorrichtung ist es möglich, eine Laser-geschnittene Folie bereitzustellen, die keine bzw. nur sehr kleine Wulststrukturen und/oder Metallspritzer aus erstarrtem Metall im Schneidbereich aufweist. Wird die Folie als Bestandteil einer Batterie verwendet, ist deren elektrische Leistungsfähigkeit und Langzeitstabilität höher und das Risiko von Kurzschlüssen in der Batteriezelle geringer.

Die Herstellung von Elektroden aus Lithiumfolie (z.B. einer Dicke von 20 bis 250 µm) bringt wegen der hohen Duktilität des Lithiums, der geringen Schmelztemperatur des Lithiums von 180,5 °C, sowie der hohen Reaktivität des Lithiums mit anderen Elementen einige Herausforderungen hinsichtlich der Bearbeitung mit sich.

Das Stanzen (Flachbettstanzen, Rotationsstanzen, etc.) von dünnen Lithiummetallfolien ist Stand der Technik. Jedoch ist die Verarbeitung dieses hochduktilen Werkstoffs problematisch, da es regelmäßig zu einem Verkleben des Stanzwerkzeugs und der Folie kommt, was zu langen Ausfallzeiten führt und einen hohen Arbeitsaufwand für die Säuberung des Stanzwerkzeugs erfordert. Zudem ist die verklebte Folie meist nicht mehr brauchbar, was zu hohen Ausschüssen führt. Das Stanzen von Lithiumfolien ist daher vor allem im industriellen Maßstab nicht sehr ökonomisch durchführbar.

Es ist im Stand der Technik bekannt, Metallfolien anstelle von Stanzen über die Einwirkung eines Laserstrahls zu schneiden. Es handelt sich bei dem Laserschneiden um ein kontaktfreies Trennverfahren, welches die Probleme eines Verklebens der Metallfolie mit einem Stanzwerkzeug vermeiden kann. Das Laserschneiden wird beispielsweise in der Elektrodenkonfektionierung angewendet. Hier gibt es für Metallfolien mit oder ohne Aktivmaterialbeschichtung beliebiger Dicken die Möglichkeit, auf verschiedene Laserquellen und Strahlapplikationsformen zurückzugreifen. Besonders breiten Einsatz bei der Elektrodenkonfektionierung findet ein Ultrakurzpulslaser (UKP) und ein YAG-Laser, wobei der YAG-Laser als "continuous wave"-Laser (kurz: CW-Laser) mit mehreren Wellenlängen hoher Strahlungsdivergenz (sog. MM-Verfahren) oder mit einer einzelnen Wellenlänge mit einer geringen Strahldivergenz (sog. SM-Verfahren) eingesetzt wird.

Die WO 2019/076592 A1 offenbart die Verwendung eines Hochleistungs-CW-Laser zur Konfektionierung von Kathodenfolien, d.h. metallischen Trägerfolien mit diversen kathodischen Beschichtungen. Der Schnitt durch die diversen kathodischen Beschichtungen wird hierbei mit einem Mehrfachschnitt erzeugt, d.h. die kathodischen Beschichtungen werden mit mehreren, zeitlich versetzten Überläufen des Laserstrahls über den Schnittbereich geschnitten. Die metallische Trägerfolie (z.B. aus Alu, Nickel oder Stahl) wird dagegen nur mit einem Einfachschnitt geschnitten, d.h. in einem einzigen Überlauf des Laserstrahls über den Schnittbereich. Bei einer Folie, die ein Metall mit einem niedrigen Schmelzpunkt enthält oder daraus besteht (wie z.B. Lithium), würde dieses Vorgehen zu einem lokalen Aufschmelzen des Lithiums im Bereich der Schnittkante und zu einer Ausbildung von Wulststrukturen und Spritzer-Strukturen aus Lithium in diesem Bereich führen.

Die DE 10 2019 110375 A1 (offenbarend alle Schritte und Merkmale des Oberbegriffs der Ansprüche 1, 8, und 15) offenbart ein Laserschneiden und Laserschweißen von Lithium-Metallfolien. Hierbei kommt ein UKP-Laser mit variabler Leistungsdichte im Laserspot (Durchmesser des Laserspots: 10 bis 200 µm) zum Einsatz. Die Pulsdauer liegt hierbei im Bereich von 0,5 Nanosekunden bis 0,5 Mikrosekunden und die Pulsfrequenz im Bereich von 1 bis 100 kHz, wobei die Verfahrgeschwindigkeit des Lasers relativ zur Metallfolie im Bereich von 0,1 bis 2 m/s liegt.

Jansen, T. et al. (Batteries, 2018, Band 4, Ausgabe 37, S. 1-16) haben jedoch gefunden, dass es mit einem UKP-Laser nicht möglich ist, einen Laserschnitt durch eine Lithiumfolie durchzuführen, ohne dass es zur Bildung von Defekten in Form von Wulststrukturen und/oder Spritzern aus erstarrtem Lithiummetall kommt. Solche Wulststrukturen und Spritzer sind besonders für die Verwendung der geschnittenen Lithiumfolien zur Batterieherstellung nachteilig, da sie im Betrieb der Batterie lokal kritische Stromspitzen verursachen können, welche Nebenreaktionen und eine Dendritenbildung fördern können. Dies kann die Lebensdauer der Batterie verkürzen. Ferner können diese Strukturen das Risiko eines Kurzschlusses erhöhen (verursacht beispielsweise durch ein Durchtreten dieser Strukturen durch den Separator). Der Kurzschluss kann dann zum thermischen Durchgehen der Batterie führen, was nicht nur die Batterie zerstört, sondern auch eine Gefahr für den Benutzer darstellt (Verbrennungs- und Explosionsgefahr).

Die DE 10 2009 049 762 B3 offenbart ein Verfahren, bei dem eine Folie, die Aluminium enthält, mit einem CW-Laser mit einer Leistungsdichte von mindestens 10⁷ W/mm² geschnitten wird. Die resultierende Schneidkante ist nahezu senkrecht zur Oberfläche ausgebildet und weist keine Übergänge zu weiteren Schichten der Folie (z.B. einer Schicht aus Keramik und einer Schicht aus Eisenphosphat) auf. Der Laser hat in diesem Fall somit das Aluminiummetall der Folie lediglich sublimiert, aber nicht geschmolzen. Mit diesem Verfahren ist es jedoch nicht möglich, ein Metall, das einen Schmelzpunkt von maximal 200 °C aufweist (wie z.B. Lithiummetall) ohne Auftreten einer Metallschmelze zu schneiden. Wird dieses Verfahren zum Schneiden von einem solchen Metall angewendet, so kommt es zum Aufschmelzen von diesen Metallen an der Schneidkante und zur Bildung von Defekten in Form von Wulststrukturen und/oder Spritzern aus erstarrtem Metall. Die Ausbildung solcher Defektstrukturen ist für eine Verwendung der geschnittenen Folie im Batteriebereich nachteilig.

Die US 2019/093185 A1 offenbart eine Polsterschicht einer Fahrzeuginnenverkleidung und ein Verfahren zu deren Herstellung, wobei die Polsterschicht eine Airbag-Reißnaht umfasst, die aus mehreren, entlang eines Reißnahtmusters angeordneten Blindschnitten besteht. In dem Verfahren wird jeder der Blindschnitte durch Lasermaterialentfernung an mehreren Stellen entlang des Musters gebildet, wobei hierbei zur Bildung der Blindschnitte in der Polsterschicht Laserenergie in einer Reihe ultrakurzer Impulse an die Polsterschicht abgegeben wird. Das Verfahren wird als besonders nützlich bei der Herstellung von Lederpolstermaterialien beschrieben, bei denen es nachweislich schwierig ist, nicht sichtbare Airbag-Reißnähte zu bilden.

Es besteht ein Bedarf im Stand der Technik, auch Metallfolien, die ein niedrigschmelzendes Metall (wie z.B. Lithium) enthalten oder daraus bestehen, mit einem Laser zu schneiden, ohne dass es zu einer Ausbildung von Defektstrukturen im Bereich der Schneidkante kommt, die sich für eine Verwendung der Folie im Batteriebereich nachteilig auswirken.

Ausgehend hiervon war es die Aufgabe der vorliegenden Erfindung, ein Verfahren und eine Vorrichtung zum Schneiden einer Folie bereitzustellen, die ein Metall mit niedrigem Schmelzpunkt enthält oder daraus besteht, das die im Stand der Technik bekannten Nachteile nicht aufweist. Insbesondere sollte es mit dem Verfahren und mit der Vorrichtung möglich sein, eine solche Folie so zu schneiden, dass es zu keiner Ausbildung von Strukturen oder lediglich einer Ausbildung von sehr kleinen Strukturen im Bereich der Schneidkante (z.B. Metallwülsten und Metallspritzern) kommt, sodass sich im Falle einer Verwendung der Folie als Batteriebestandteil keine Nachteile ergeben. Ferner sollte eine Folie, die ein Metall mit niedrigem Schmelzpunkt enthält oder daraus besteht, bereitgestellt werden, deren Bereich um die Schneidkanten keine bzw. nur sehr kleine Wulststrukturen und Metallspritzer aufweisen.

Die Aufgabe wird gelöst durch das Verfahren mit den Merkmalen von Anspruch 1, die Vorrichtung mit den Merkmalen von Anspruch 8 und den Film mit den Merkmalen von Anspruch 15. Die abhängigen Ansprüche zeigen vorteilhafte Weiterbildungen auf.

Erfindungsgemäß wird ein Verfahren zum Schneiden einer Folie, die mindestens eine Schicht aufweist oder daraus besteht, die ein Metall enthält oder daraus besteht, bereitgestellt, umfassend die Schritte
a) Bereitstellen eines Mittels zum Positionieren einer Folie;
b) Positionieren einer Folie, die mindestens eine Schicht aufweist oder daraus besteht, die ein Metall enthält oder daraus besteht (z.B. eine Folie, die aus Lithium besteht), durch das Mittel zum Positionieren einer Folie;
c) Bereitstellen eines Lasers, der dazu geeignet ist, gepulste Laserstrahlung in Richtung der Folie zu strahlen;
d) Abstrahlen von gepulster Laserstrahlung von dem Laser in Richtung der Folie;

wobei der Laser und/oder das Mittel zum Positionieren einer Folie so gesteuert wird/werden, dass gepulste Laserstrahlung, die der Laser in Richtung der Folie auf die Folie strahlt, die mindestens eine Schicht der Folie durchschneidet,
dadurch gekennzeichnet, dass der Laser und/oder das Mittel zum Positionieren einer Folie so gesteuert werden, dass zwei aufeinanderfolgende Pulse des Lasers nicht auf eine gleiche Fläche der Folie abgestrahlt werden und mindestens zwei nicht aufeinanderfolgende Pulse des Lasers in einem zeitlichen Abstand, der größer ist als eine Pulspause zwischen zwei aufeinanderfolgenden Pulsen, auf die gleiche Fläche der Folie abgestrahlt werden.

Die Folie kann aus einer einzelnen Schicht bestehen, die ein Metall enthält oder daraus besteht (z.B. eine Folie, die aus Lithium besteht). Ferner kann die Folie mehrere Schichten aufweisen, wobei mindestens eine Schicht der Folie ein Metall enthält oder daraus besteht (z.B. die Folie neben einer nicht-metallischen Schicht eine Schicht aufweist, die aus einem Metall, wie beispielsweise Lithium, besteht).

Der Vorteil des Verfahrens liegt darin, dass es ein Aufschmelzen von Metall der Folie im Schneidbereich reduziert. Stattdessen wird das Metall der Folie im Schneidbereich hauptsächlich sublimiert, d.h. es wird im Wesentlichen lokal verdampft ohne selbst zu schmelzen und ohne Metall in der Umgebung so aufzuwärmen, dass dieses schmilzt. Erreicht werden kann dies über die angegebene Verfahrensführung, wobei eine geeignete Wahl der Intensität der Laserstrahlung, die in einem bestimmten Zeitpunkt auf eine bestimmte Fläche der Schneidkante einwirkt, vorteilhaft ist. Durch die angegebene Verfahrensführung lässt sich der Eintrag der Energie lokal begrenzen und die Wärmeleitung mit der daraus verbundenen Temperaturerhöhung über den Schmelzpunkt verringern. Das Metall schmilzt somit kaum, sondern sublimiert hauptsächlich am Wirkort der Laserstrahlung, d.h. punktuell. Aufgrund dieser Art des Materialabtrags kann eine Bildung von Wulststrukturen und Spritzer-Strukturen von erstarrtem Metall (z.B. Lithium) stark reduziert bis ganz vermieden werden. Es kann somit mit dem Verfahren eine geschnittene Metallfolie bereitgestellt werden, die sich hervorragend zur Verwendung als Batteriebestandteil eignet, da sie das Risiko von kritischen Nebenreaktionen, einer Dendritenbildung und elektrischen Kurzschlüssen verringert und damit eine höhere Langzeitstabilität der Batterie sowie geringere Gefahren für den Benutzer sicherstellt.

Das im Verfahren eingesetzte Mittel zur Positionierung einer Folie kann ein Mittel zum Positionieren einer Folie über einen Kontakt zur Folie sein oder ein Mittel zum kontaktlosen Positionieren einer Folie sein. Das Mittel zum Positionieren einer Folie ist bevorzugt ein Mittel zum Halten und/oder Bewegen einer Folie. Beispielsweise enthält das Mittel zum Positionieren einer Folie ein Mittel ausgewählt aus der Gruppe bestehend aus Stützstruktur, Förderband, Luftkissenvorrichtung und Kombinationen hiervon, oder besteht daraus.

Das Verfahren kann dadurch gekennzeichnet sein, dass der Laser und/oder die Mittel zum Positionieren einer Folie so gesteuert werden, optional über eine Steuereinheit, dass mindestens fünf, weiter bevorzugt mindestens zehn, besonders bevorzugt mindestens 20, ganz besonders bevorzugt mindestens 35, insbesondere mindestens 50, nicht aufeinanderfolgende Pulse des Lasers in einem zeitlichen Abstand, der größer ist als eine Pulspause zwischen zwei aufeinanderfolgenden Pulsen, auf die gleiche Fläche der Folie abgestrahlt werden.

Der zeitliche Abstand zwischen zwei nicht aufeinanderfolgenden Pulsen auf die gleiche Fläche der Folie beträgt bevorzugt mindestens 10 ms, besonders bevorzugt mindestens 25 ms.

Ferner kann das Verfahren dadurch gekennzeichnet sein, dass mindestens ein, bevorzugt alle, Parameter ausgewählt aus der Gruppe bestehend aus Pulswiederholrate des Lasers, Pulsdauer des Lasers, Pulsspotgröße des Lasers, Pulsspotform des Lasers und Relativbewegung zwischen Laser und Mittel zum Positionieren einer Folie, bevorzugt die Relativbewegung zwischen Laser und Mittel zum Positionieren einer Folie in Abhängigkeit von den anderen Parametern, eingestellt wird/werden, optional über eine Steuereinheit, sodass dass zwei aufeinanderfolgende Pulse des Lasers nicht auf eine gleiche Fläche der Folie abgestrahlt werden.

In dem Verfahren kann, optional über eine Steuereinheit, eine Pulswiederholrate der Laserstrahlung des Lasers nach der Gleichung f ≤ (t_{Puls} + d_{Puls}/v)⁻¹ eingestellt werden. Ferner kann, optional über eine Steuereinheit, eine Pulswiederholrate der Laserstrahlung des Lasers im Bereich von 10 bis 100 kHz, bevorzugt um Bereich von 20 bis 80 kHz, besonders bevorzugt im Bereich von 40 bis 60 kHz, insbesondere auf 50 kHz, eingestellt werden. Hierbei und im Folgenden gilt:
- f:: Pulswiederholrate [Hz];
- t_{Puls}:: Pulsdauer [s];
- d_{Puls}:: Durchmesser des Pulsspots [m];
- v:: Relativbewegung zwischen Laser und Mittel zum Positionieren einer Folie [m/s].

Abgesehen davon kann in dem Verfahren, optional über eine Steuereinheit, eine Pulsdauer der Laserstrahlung des Lasers nach der Gleichung t_{Puls} ≤ 1/f - d_{Puls}/v eingestellt werden. Zudem kann, optional über eine Steuereinheit, eine Pulsdauer der Laserstrahlung des Lasers im Bereich von 0,1 bis 10 µs, bevorzugt 0,2 bis 8 µs, besonders bevorzugt 0,3 bis 6 µs, insbesondere 0,5 bis 2 µs, eingestellt werden.

Darüber hinaus kann in dem Verfahren, optional über eine Steuereinheit, ein Pulsspotdurchmesser der Laserstrahlung des Lasers nach der Gleichung d_{Puls} ≤ (1/f - t_{Puls})·v eingestellt werden. Ferner kann, optional über eine Steuereinheit, ein Pulsspotdurchmesser der Laserstrahlung des Lasers im Bereich von 10 bis 100 µm, bevorzugt 20 bis 70 µm, besonders bevorzugt 40 bis 50 µm, insbesondere 45 µm, eingestellt werden. Als Pulsspotdurchmesser wird bevorzugt die räumlich längste Ausdehnung des Laserspots in eine Richtung verstanden, die sich aus einer relativen Bewegung zwischen dem Laser und der Folie ergibt. Der Pulsspot kann beispielsweise eine runde, ovale oder rechteckige Form aufweisen.

Zudem kann in dem Verfahren, optional über eine Steuereinheit, eine Relativbewegung zwischen dem Laser und dem Mittel zum Positionieren einer Folie nach der Gleichung v ≥ d_{Puls} / (1/f - t_{Puls}) eingestellt werden. Ferner kann, optional über eine Steuereinheit, eine Relativbewegung zwischen dem Laser und dem Mittel zum Positionieren einer Folie in einem Bereich von 2 bis 15 m/s, bevorzugt 3 bis 12 m/s. besonders bevorzugt 4 bis 10 m/s, eingestellt werden.

Das Verfahren kann dadurch gekennzeichnet sein, dass eine Relativbewegung zwischen dem Laser und dem Mittel zum Positionieren einer Folie durch Steuerung einer Bewegung des Lasers und/oder dem Mittel zum Positionieren einer Folie bewirkt wird, optional gesteuert über eine Steuereinheit. Bei einem Transport der Folie über das Mittel zum Positionieren einer Folie zum Laser kann ein Schneiden einer Folie von einer Rolle erfolgen. Dies kann als statischer Schneidprozess (Folie wird von der Rolle abgerollt und zum Schneidbereich gefördert, dort stehend geschnitten und anschließend abtransportiert) erfolgen. Alternativ kann dies als "on-the-fly"-Fertigungsprozess erfolgen, d.h. als kontinuierlicher Schneidprozess mit kontinuierlichem Materialvorschub (Zuschnitt erfolgt während des kontinuierlichen Förderns der Folie von der Rolle über die Mittel zum Positionieren einer Folie). Vorteilhafterweise weist das Mittel zum Positionieren einer Folie somit einen Transportmechanismus auf.

Die in dem Verfahren eingesetzte Folie kann eine Schicht oder mehrere Schichten enthalten oder daraus bestehen, die ein Metall mit einem Schmelzpunkt im Bereich von ≤ 200 °C enthält oder daraus besteht, wobei das Metall bevorzugt Lithium ist. Ferner kann die in dem Verfahren eingesetzte Folie eine weitere Schicht oder mehrere weitere Schichten enthalten oder daraus bestehen, die ein Material mit einem Schmelzpunkt im Bereich von >200 °C enthält oder daraus besteht, wobei das Material bevorzugt ausgewählt ist aus der Gruppe bestehend aus Nickel, Kupfer Edelstahl, Kohlenstoff, Silizium, Polymer, Keramik und Kombinationen hiervon. In dem Verfahren kann, optional gesteuert durch die Steuereinrichtung, die weitere Schicht oder die mehreren weiteren Schichten durchgeschnitten oder nicht durchgeschnitten werden.

Der in dem Verfahren eingesetzte Laser kann ein CW-Faserlaser sein, der in einem gepulsten Modus, bevorzugt im "single-sector-pulsed"-Modus, betrieben wird. Zudem kann vorgesehen sein, dass der verwendete Laser Laserstrahlung mit Pulsen in Form einer Rechteckfunktion ausstrahlt. Darüber hinaus kann vorgesehen sein, dass der Laser Laserstrahlung mit einer Wellenlänge im UV-Bereich, VIS-Bereich, NIR-Bereich oder IR-Bereich ausstrahlt, bevorzugt Laserstrahlung mit einer Wellenlänge im Bereich von 400 nm bis 1500 nm, insbesondere Laserstrahlung mit einer Wellenlänge von 1070 nm. Abgesehen davon kann vorgesehen sein, dass der Laser Laserstrahlung emittiert, dessen Strahlungsintensität im Bereich von 1·10⁷ W/cm² bis 1·10⁹ W/cm² liegt. Der im Verfahren eingesetzte Laser kann ein Ytterbium-dotierter Laser sein.

Erfindungsgemäß wird eine Vorrichtung zum Schneiden einer Folie, die mindestens eine Schicht aufweist oder daraus besteht, die ein Metall enthält oder daraus besteht, bereitgestellt, aufweisend
a) eine Mittel zum Positionieren einer Folie;
b) einen Laser, der konfiguriert ist, gepulste Laserstrahlung in Richtung einer Folie zu strahlen, die durch das Mittel zum Positionieren einer Folie positioniert wird und die mindestens eine Schicht aufweist oder daraus besteht, die ein Metall enthält oder daraus besteht( z.B. eine Folie, die aus Lithium besteht);
c) eine Steuereinheit, die kommunikativ mit dem Laser und/oder dem Mittel zum Positionieren einer Folie verbunden ist;

wobei die Steuereinheit konfiguriert ist, den Laser und/oder das Mittel zum Positionieren einer Folie so zu steuern, dass gepulste Laserstrahlung, die der Laser in Richtung einer von dem Mittel zur Positionierung einer Folie positionierten Folie strahlt, die mindestens eine Schicht der Folie durchschneidet,
dadurch gekennzeichnet, dass die Steuereinheit konfiguriert ist, den Laser und/oder das Mittel zum Positionieren einer Folie so zu steuern, dass zwei aufeinanderfolgende Pulse des Lasers nicht auf eine gleiche Fläche der Folie abgestrahlt werden und mindestens zwei nicht aufeinanderfolgende Pulse des Lasers in einem zeitlichen Abstand, der größer ist als eine Pulspause zwischen zwei aufeinanderfolgenden Pulsen, auf die gleiche Fläche der Folie abgestrahlt werden.

Der Vorteil der Vorrichtung liegt darin, dass sie ein Aufschmelzen von Metall der Folie im Schneidbereich reduziert. Stattdessen wird das Metall der Folie im Schneidbereich hauptsächlich sublimiert, d.h. es wird im Wesentlichen lokal verdampft ohne selbst zu schmelzen und ohne Metall in der Umgebung so aufzuwärmen, dass dieses schmilzt. Erreicht werden kann dies über die angegebene Konfiguration der Steuereinheit der Vorrichtung, wobei eine geeignete Wahl der Intensität der Laserstrahlung, die in einem bestimmten Zeitpunkt auf eine bestimmte Fläche der Schneidkante einwirkt, vorteilhaft ist. Durch die angegebene Konfiguration der Steuereinrichtung lässt sich der Eintrag der Energie lokal begrenzen und die Wärmeleitung mit der daraus verbundenen Temperaturerhöhung über den Schmelzpunkt verringern. Das Metall schmilzt somit kaum, sondern sublimiert hauptsächlich am Wirkort der Laserstrahlung, d.h. punktuell. Aufgrund dieser Art des Materialabtrags kann eine Bildung von Wulststrukturen und Spritzer-Strukturen von erstarrtem Metall (z.B. Lithium) stark reduziert bis ganz vermieden werden. Es kann somit mit der Vorrichtung eine geschnittene Metallfolie bereitgestellt werden, die sich hervorragend zur Verwendung als Batteriebestandteil eignet, da sie das Risiko von kritischen Nebenreaktionen, einer Dendritenbildung und elektrischen Kurzschlüssen verringert und damit eine höhere Langzeitstabilität der Batterie sowie geringere Gefahren für den Benutzer sicherstellt.

Das Mittel zur Positionierung einer Folie der Vorrichtung kann ein Mittel zum Positionieren einer Folie über einen Kontakt zur Folie sein oder ein Mittel zum kontaktlosen Positionieren einer Folie sein. Das Mittel zum Positionieren einer Folie ist bevorzugt ein Mittel zum Halten und/oder Bewegen einer Folie. Beispielsweise enthält das Mittel zum Positionieren einer Folie ein Mittel ausgewählt aus der Gruppe bestehend aus Stützstruktur, Förderband, Luftkissenvorrichtung und Kombinationen hiervon, oder besteht daraus.

Die Vorrichtung kann dadurch gekennzeichnet sein, dass die Steuereinheit konfiguriert ist, den Laser und/oder das Mittel zum Positionieren einer Folie so zu steuern, dass mindestens fünf, weiter bevorzugt mindestens zehn, besonders bevorzugt mindestens 20, ganz besonders bevorzugt mindestens 35, insbesondere mindestens 50, nicht aufeinanderfolgende Pulse des Lasers in einem zeitlichen Abstand, der größer ist als eine Pulspause zwischen zwei aufeinanderfolgenden Pulsen, auf die gleiche Fläche der Folie abgestrahlt werden. Diese Ausgestaltungsform ist sinnvoll, wenn dickere Metallfolien geschnitten werden sollen. Da es im Fall von dickeren Metallfolien nicht zu einem vollständigen Schnitt bei zwei nicht aufeinanderfolgenden Einzelpulsen auf die zu schneidende Fläche kommt, wird die zu schneidende Fläche (Schnittkontur) in einem bestimmten zeitlichen Abstand mehrfach abgefahren (Anzahl der Überläufe) und mehr als zwei nicht aufeinanderfolgende Pulse auf die gleiche Fläche der Folie gestrahlt.

Der zeitliche Abstand zwischen zwei nicht aufeinanderfolgenden Pulsen auf die gleiche Fläche der Folie beträgt bevorzugt mindestens 10 ms, besonders bevorzugt mindestens 25 ms. Dieser zeitliche Abstand (Verzögerungszeit) zwischen den einzelnen Wiederholungen kann eine ausreichende Abkühlung des Metalls (z.B. des Lithiums) gewährleisten und somit das lokale Auftreten von Schmelzvorgängen vermeiden. Insgesamt kann jedoch trotz des zeitlichen Abstands zwischen einzelnen Laserpulsen auf eine bestimmte Fläche (Spot) der Folie ein durchgängiger Schnitt in der Folie in einem Zeitfenster von weniger als 1 Sekunde gegeben sein, wobei die Dauer natürlich von der Gesamtdicke der Folie und der Kantenlänge des Zuschnitts abhängt.

Die Steuereinheit kann konfiguriert sein, mindestens einen, bevorzugt alle, Parameter ausgewählt aus der Gruppe bestehend aus Pulswiederholrate des Lasers, Pulsdauer des Lasers, Pulsspotgröße des Lasers, Pulsspotform des Lasers und Relativbewegung zwischen Laser und Mittel zum Positionieren einer Folie, bevorzugt die Relativbewegung zwischen Laser und Mittel zum Positionieren einer Folie in Abhängigkeit von den anderen Parametern, einzustellen, sodass zwei aufeinanderfolgende Pulse des Lasers nicht auf eine gleiche Fläche der Folie abgestrahlt werden.

Ferner kann die Steuereinheit konfiguriert sein, eine Pulswiederholrate (Pulsfrequenz) der Laserstrahlung des Lasers nach der Gleichung f ≤ (t_{Puls} + d_{Puls}/v)⁻¹ einzustellen. Zudem kann die Vorrichtung konfiguriert sein, eine Pulswiederholrate der Laserstrahlung des Lasers im Bereich von 10 bis 100 kHz, bevorzugt um Bereich von 20 bis 80 kHz, besonders bevorzugt im Bereich von 40 bis 60 kHz, insbesondere auf 50 kHz, einzustellen. Hierbei und im Folgenden gilt:
- f:: Pulswiederholrate [Hz];
- t_{Puls}:: Pulsdauer [s];
- d_{Puls}:: Durchmesser des Pulsspots [m];
- v:: Relativbewegung zwischen Laser und Mittel zum Positionieren einer Folie [m/s]

Abgesehen davon kann die Steuereinheit konfiguriert sein, eine Pulsdauer der Laserstrahlung des Lasers nach der Gleichung t_{Puls} ≤ 1/f - d_{Puls}/v einzustellen. Ferner kann die Steuereinheit konfiguriert sein, eine Pulsdauer der Laserstrahlung des Lasers im Bereich von 0,1 bis 10 µs, bevorzugt 0,2 bis 8 µs, besonders bevorzugt 0,3 bis 6 µs, insbesondere 0,5 bis 2 µs, einzustellen.

Darüber hinaus kann die Steuereinheit konfiguriert sein, einen Pulsspotdurchmesser der Laserstrahlung des Lasers nach der Gleichung d_{Puls} ≤ (1/f - t_{Puls})·v einzustellen. Zudem kann die Steuereinheit konfiguriert sein, einen Pulsspotdurchmesser der Laserstrahlung des Lasers Bereich von 10 bis 100 µm, bevorzugt 20 bis 70 µm, besonders bevorzugt 40 bis 50 µm, insbesondere 45 µm, einzustellen. Als Pulsspotdurchmesser wird bevorzugt die räumlich längste Ausdehnung des Laserspots in eine Richtung verstanden, die sich aus einer relativen Bewegung zwischen dem Laser und der Folie ergibt. Der Pulsspot kann beispielsweise eine runde, ovale oder rechteckige Form aufweisen.

Ferner kann die Steuereinheit konfiguriert sein, eine Relativbewegung zwischen dem Laser und dem Mittel zum Positionieren einer Folie nach der Gleichung v ≥ d_{Puls} / (1/f - t_{Puls}) einzustellen. Zudem kann die Steuereinheit konfiguriert sein, eine Relativbewegung zwischen dem Laser und der Mittel zum Positionieren einer Folie in einem Bereich von 2 bis 15 m/s, bevorzugt 3 bis 12 m/s. besonders bevorzugt 4 bis 10 m/s, einzustellen.

Die Steuereinheit kann konfiguriert sein, eine Relativbewegung zwischen dem Laser und dem Mittel zum Positionieren einer Folie durch Steuerung einer Bewegung des Lasers und/oder der Mittel zum Positionieren einer Folie zu bewirken. Bevorzugt weist das Mittel zum Positionieren einer Folie einen Transportmechanismus auf. Über diesen Transportmechanismus kann eine Folie von einer Rolle abgerollt und zum Laser befördert werden. Dies ist auch auf einem kontinuierlichen Weg möglich, sodass sich die Vorrichtung zu einem kontinuierlichen Schneiden einer Folie eignet.

Auf der Mittel zum Positionieren einer Folie der Vorrichtung kann eine Folie angeordnet sein, die mindestens eine Schicht aufweist, die ein Metall enthält oder daraus besteht. Die Folie enthält bevorzugt eine Schicht oder mehrere Schichten oder besteht daraus, die ein Metall mit einem Schmelzpunkt im Bereich von ≤ 200 °C enthält oder daraus besteht, wobei das Metall bevorzugt Lithium ist. Ferner kann die Folie eine weitere Schicht oder mehrere weitere Schichten enthalten oder daraus bestehen, die ein Material mit einem Schmelzpunkt im Bereich von >200 °C enthält oder daraus besteht, wobei das Material bevorzugt ausgewählt ist aus der Gruppe bestehend aus Nickel, Kupfer, Edelstahl, Kohlenstoff, Silizium, Polymer, Keramik und Kombinationen hiervon. Die Steuereinheit der Vorrichtung kann konfiguriert sein, auch die weitere Schicht oder die mehreren weiteren Schichten durchzuschneiden oder nicht durchzuschneiden.

Der Laser der Vorrichtung kann ein CW-Faserlaser sein, der bevorzugt in einem gepulsten Modus, bevorzugt im "single-sector-pulsed"-Modus, betrieben wird. Der Laser kann dazu konfiguriert sein, Laserstrahlung mit Pulsen in Form einer Rechteckfunktion auszustrahlen. Zudem kann der Laser dazu konfiguriert sein, Laserstrahlung mit einer Wellenlänge im UV-Bereich, VIS-Bereich, NIR-Bereich oder IR-Bereich auszustrahlen, bevorzugt Laserstrahlung im Bereich von 400 nm bis 1500 nm auszustrahlen, insbesondere Laserstrahlung mit einer Wellenlänge von 1070 nm auszustrahlen. In einer bevorzugten Ausgestaltungsform ist der Laser dazu konfiguriert, Laserstrahlung auszustrahlen, dessen Strahlungsintensität im Bereich von 1·10⁷ W/cm² bis 1·10⁹ W/cm² liegt. Der Laser kann ein Ytterbium-dotierter Laser sein.

Erfindungsgemäß wird zudem eine Folie bereitgestellt, die ein Metall mit einem Schmelzpunkt von ≤ 200 °C, bevorzugt Lithium, enthält oder daraus besteht und eine Oberseitenfläche, eine Unterseitenfläche und mindestens eine Laser-geschnittene Seitenfläche aufweist, wobei die mindestens eine Seitenfläche von der Oberseitenfläche durch eine erste Schneidkante getrennt ist und von der Unterseitenfläche durch eine zweite Schneidkante getrennt ist. Die Folie ist dadurch gekennzeichnet, dass
i) die Oberseitenfläche in einem Bereich mit einer Entfernung von ≤ 100 µm, bevorzugt ≤ 50 µm, besonders bevorzugt ≤ 20 µm, zur ersten Schneidkante keine Erhebungen gegenüber einer planaren Fläche der Oberseitenfläche aufweist oder Erhebungen mit einer Höhe von lediglich ≤ 100 µm, bevorzugt ≤ 50 µm, besonders bevorzugt ≤20 µm, gegenüber einer planaren Fläche der Oberseitenfläche aufweist; und/oder
ii) die Unterseitenfläche in einem Bereich mit einer Entfernung von ≤ 100 µm, bevorzugt ≤ 50 µm, besonders bevorzugt ≤ 20 µm, zur zweiten Schneidkante keine Erhebungen gegenüber einer planaren Fläche der Unterseitenfläche aufweist oder Erhebungen mit einer Höhe von lediglich ≤ 100 µm, bevorzugt ≤ 50 µm, besonders bevorzugt ≤20 µm, gegenüber einer planaren Fläche der Oberseitenfläche aufweist; und/oder
iii) die mindestens eine Seitenfläche in einem Bereich mit einer Entfernung von ≤ 100 µm, bevorzugt ≤ 50 µm, besonders bevorzugt ≤ 20 µm, zur ersten Schneidkante und/oder in einem Bereich mit einer Entfernung von ≤ 100 µm, bevorzugt ≤ 50 µm, besonders bevorzugt ≤ 20 µm, zur zweiten Schneidkante keine Erhebungen gegenüber einer planaren Fläche der Seitenfläche aufweist oder Erhebungen mit einer Höhe von lediglich ≤ 100 µm, bevorzugt ≤ 50 µm, besonders bevorzugt ≤20 µm, gegenüber einer planaren Fläche der Seitenfläche aufweist.

Die Folie kann durch die oben genannten Merkmale i) und ii) gekennzeichnet sein. Ferner kann die Folie durch die oben genannten Merkmale i) und iii) gekennzeichnet sein. Darüber hinaus kann die Folie durch die Merkmale ii) und iii) gekennzeichnet sein. Bevorzugt ist die Folie über die Merkmale i), ii) und iii) gekennzeichnet.

Die erfindungsgemäße Folie hat den Vorteil, dass sie das Risiko von kritischen Nebenreaktionen, einer Dendritenbildung und elektrischen Kurzschlüssen verringert und damit eine höhere Langzeitstabilität der Batterie sowie geringere Gefahren für den Benutzer sicherstellt.

Die Folie kann dadurch gekennzeichnet sein, dass ihre mindestens eine Seitenfläche zumindest bereichsweise eine Wellenform (bzw. Zacken) aufweist. Diese Wellenform kann dadurch entstehen, indem die Laser-geschnittene Seitenfläche durch zwei aufeinanderfolgende Pulse des Lasers, die nicht auf eine gleiche Fläche der Folie abgestrahlt wurden, hergestellt wurde und der Laserspot einen kreisförmigen Durchmesser aufweist. In diesem Fall werden nebeneinanderliegende Zylinder mit einer kreisförmigen Grundfläche aus der Folie entfernt (sublimiert), was zu der Wellenform in der Seitenfläche führt. Die Wellenform kann verringert oder vermieden werden, wenn ein Laserspot mit einer ovalen (in Vorschubrichtung gestreckt) oder eckigen Grundfläche eingesetzt wird, da in diesem Fall bündig nebeneinanderliegende Volumensegmente aus der Folie entfernt (sublimiert) werden.

Durch die Sublimation des Metalls an der Schneidkante kann die Folie auf ihrer mindestens einen Seitenfläche Verfärbungen und Plasmarückstände aufweisen.

In einer bevorzugten Ausführungsform ist die erfindungsgemäße Folie durch das erfindungsgemäße Verfahren hergestellt.

Anhand der nachfolgenden Figuren soll der erfindungsgemäße Gegenstand näher erläutert werden.

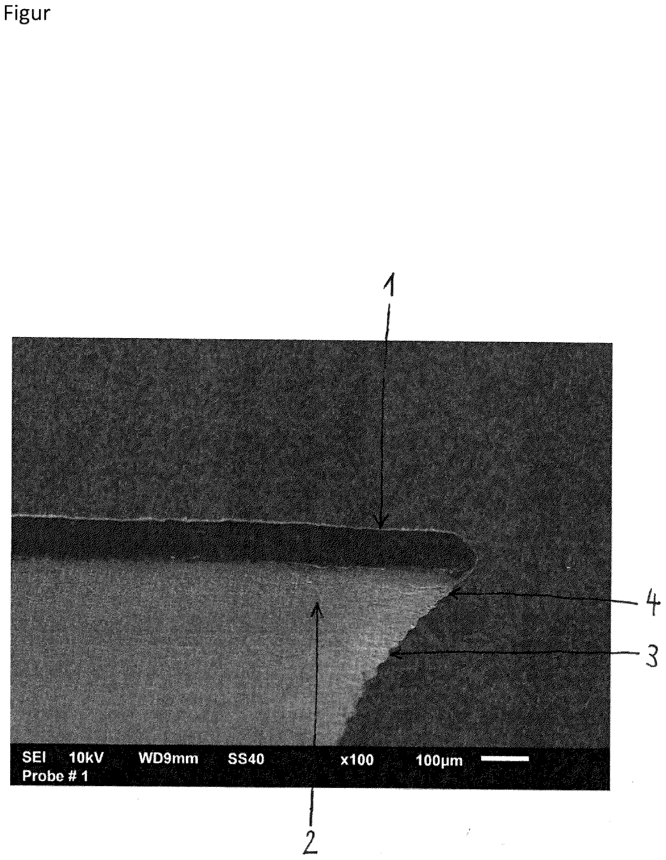

Die Figur zeigt eine REM-Aufnahme von einer Lithiumfolie, die mit dem erfindungsgemäßen Verfahren bzw. der erfindungsgemäßen Vorrichtung geschnitten wurde. Der Schnitt von der Oberseitenfläche 1 zur Unterseitenfläche 2 der Lithiumfolie hat eine Laser-geschnittene Seitenfläche 3 in der Lithiumfolie entstehen lassen. Die Seitenfläche 3 ist von der Oberseitenfläche 1 durch eine erste Schneidkante (nicht sichtbar in der Figur) getrennt und von der Unterseitenfläche 2 durch eine zweite Schneidkante 4 getrennt. In einem Bereich mit einer Entfernung von ≤ 100 µm zur zweiten Schneidkante 4 weist die Unterseitenfläche 2 praktisch keine Erhebungen gegenüber einer planaren Fläche der Unterseitenfläche 2 auf (Höhe von möglichen Erhebungen ≤ 20 µm).

### Bezugszeichenliste

- 1:: Oberseitenfläche;
- 2:: Unterseitenfläche;
- 3:: Seitenfläche;
- 4:: zweite Schneidkante.

## Patentansprüche

1. Verfahren zum Schneiden einer Folie, die mindestens eine Schicht aufweist oder daraus besteht, die ein Metall enthält oder daraus besteht, umfassend die Schritte
a) Bereitstellen eines Mittels zum Positionieren einer Folie;
b) Positionieren einer Folie, die mindestens eine Schicht aufweist oder daraus besteht, die ein Metall enthält oder daraus besteht, durch das Mittel zum Positionieren einer Folie;
c) Bereitstellen eines Lasers, der dazu geeignet ist, gepulste Laserstrahlung in Richtung der Folie zu strahlen;
d) Abstrahlen von gepulster Laserstrahlung von dem Laser in Richtung der Folie;
wobei der Laser und/oder das Mittel zum Positionieren einer Folie so gesteuert wird/werden, dass gepulste Laserstrahlung, die der Laser in Richtung der Folie auf die Folie strahlt, die mindestens eine Schicht der Folie durchschneidet,
**dadurch gekennzeichnet, dass** der Laser und/oder das Mittel zum Positionieren einer Folie so gesteuert werden, dass zwei aufeinanderfolgende Pulse des Lasers nicht auf eine gleiche Fläche der Folie abgestrahlt werden und mindestens zwei nicht aufeinanderfolgende Pulse des Lasers in einem zeitlichen Abstand, der größer ist als eine Pulspause zwischen zwei aufeinanderfolgenden Pulsen, auf die gleiche Fläche der Folie abgestrahlt werden.

2. Verfahren gemäß dem vorhergehenden Anspruch, **dadurch gekennzeichnet, dass** der Laser und/oder das Mittel zum Positionieren einer Folie so gesteuert werden, optional über eine Steuereinheit, dass
i) mindestens fünf, bevorzugt mindestens zehn, besonders bevorzugt mindestens 20, ganz besonders bevorzugt mindestens 35, insbesondere mindestens 50, nicht aufeinanderfolgende Pulse des Lasers in einem zeitlichen Abstand, der größer ist als eine Pulspause zwischen zwei aufeinanderfolgenden Pulsen, auf die gleiche Fläche der Folie abgestrahlt werden; und/oder
ii) der zeitliche Abstand zwischen den mindestens zwei nicht aufeinanderfolgenden Pulsen des Lasers auf die gleiche Fläche der Folie mindestens 10 ms, bevorzugt mindestens 25 ms, beträgt.

3. Verfahren gemäß einem der vorhergehenden Ansprüche, **dadurch gekennzeichnet, dass** mindestens ein, bevorzugt alle, Parameter ausgewählt aus der Gruppe bestehend aus Pulswiederholrate des Lasers, Pulsdauer des Lasers, Pulsspotgröße, Pulsspotform des Lasers und Relativbewegung zwischen Laser und Mittel zum Positionieren einer Folie, bevorzugt die Relativbewegung zwischen Laser und Mittel zum Positionieren einer Folie in Abhängigkeit von den anderen Parametern, eingestellt wird, optional über eine Steuereinheit, sodass dass zwei aufeinanderfolgende Pulse des Lasers nicht auf eine gleiche Fläche der Folie abgestrahlt werden.

4. Verfahren gemäß einem der vorhergehenden Ansprüche, **dadurch gekennzeichnet, dass**, optional über eine Steuereinheit,
i) eine Pulswiederholrate der Laserstrahlung des Lasers nach der Gleichung f ≤ (t_{Puls} + d_{Puls}/v)⁻¹ eingestellt wird und/oder im Bereich von 10 bis 100 kHz, bevorzugt um Bereich von 20 bis 80 kHz, besonders bevorzugt im Bereich von 40 bis 60 kHz, insbesondere auf 50 kHz, eingestellt wird; und/oder
ii) eine Pulsdauer der Laserstrahlung des Lasers nach der Gleichung t_{Puls} ≤ 1/f - d_{Puls}/v eingestellt wird und/oder im Bereich von 0,1 bis 10 µs, bevorzugt 0,2 bis 8 µs, besonders bevorzugt 0,3 bis 6 µs, insbesondere 0,5 bis 2 µs, eingestellt wird; und/oder
iii) ein Pulsspotdurchmesser der Laserstrahlung des Lasers nach der Gleichung d_{Puls} ≤ (1/f - t_{Puls})·v eingestellt wird und/oder im Bereich von 10 bis 100 µm, bevorzugt 20 bis 70 µm, besonders bevorzugt 40 bis 50 µm, insbesondere 45 µm, eingestellt wird; und/oder
iv) eine Relativbewegung zwischen dem Laser und dem Mittel zum Positionieren einer Folie nach der Gleichung v ≥ d_{Puls} / (1/f - t_{Puls}) eingestellt wird und/oder in einem Bereich von 2 bis 15 m/s, bevorzugt 3 bis 12 m/s. besonders bevorzugt 4 bis 10 m/s, eingestellt wird;
wobei gilt:
f: Pulswiederholrate [Hz];
t_{Puls}: Pulsdauer [s];
d_{Puls}: Durchmesser des Pulsspots [m];
v: Relativbewegung zwischen Laser und Mittel zum Positionieren einer Folie [m/s].

5. Verfahren gemäß einem der vorhergehenden Ansprüche, **dadurch gekennzeichnet, dass** eine Relativbewegung zwischen dem Laser und dem Mittel zum Positionieren einer Folie durch Steuerung einer Bewegung des Lasers und/oder dem Mittel zum Positionieren einer Folie bewirkt wird, optional gesteuert über eine Steuereinheit.

6. Verfahren gemäß einem der vorhergehenden Ansprüche, **dadurch gekennzeichnet, dass** die Folie
i) eine Schicht oder mehrere Schichten enthält oder daraus besteht, die ein Metall mit einem Schmelzpunkt im Bereich von ≤ 200 °C enthält oder daraus besteht, wobei das Metall bevorzugt Lithium ist; und/oder
ii) eine weitere Schicht oder mehrere weitere Schichten enthält oder daraus besteht, die ein Material mit einem Schmelzpunkt im Bereich von >200 °C enthält oder daraus besteht, wobei das Material bevorzugt ausgewählt ist aus der Gruppe bestehend aus Nickel, Kupfer Edelstahl, Kohlenstoff, Silizium, Polymer, Keramik und Kombinationen hiervon.

7. Verfahren gemäß einem der vorhergehenden Ansprüche, **dadurch gekennzeichnet, dass** der Laser
i) ein CW-Faserlaser ist, der in einem gepulsten Modus, bevorzugt im "single-sector-pulsed"-Modus, betrieben wird; und/oder
ii) Laserstrahlung mit Pulsen in Form einer Rechteckfunktion ausstrahlt; und/oder
iii) Laserstrahlung mit einer Wellenlänge im UV-Bereich, VIS-Bereich, NIR-Bereich oder IR-Bereich ausstrahlt, bevorzugt Lasericht mit einer Wellenlänge im Bereich von 400 bis 1500 nm, insbesondere Laserstrahlung mit einer Wellenlänge von 1070 nm; und/oder
iv) Laserstrahlung ausstrahlt, dessen Strahlungsintensität im Bereich von 1·10⁷ W/cm² bis 1·10⁹ W/cm² liegt.

8. Vorrichtung zum Schneiden einer Folie, die mindestens eine Schicht aufweist oder daraus besteht, die ein Metall enthält oder daraus besteht, aufweisend
a) ein Mittel zum Positionieren einer Folie;
b) einen Laser, der konfiguriert ist, gepulste Laserstrahlung in Richtung einer Folie zu strahlen, die durch das Mittel zum Positionieren einer Folie positioniert wird und die mindestens eine Schicht aufweist oder daraus besteht, die ein Metall enthält oder daraus besteht;
c) eine Steuereinheit, die kommunikativ mit dem Laser und/oder dem Mittel zum Positionieren einer Folie verbunden ist;
wobei die Steuereinheit konfiguriert ist, den Laser und/oder das Mittel zum Positionieren einer Folie so zu steuern, dass gepulste Laserstrahlung, die der Laser in Richtung einer von dem Mittel zur Positionierung einer Folie positionierten Folie strahlt, die mindestens eine Schicht der Folie durchschneidet,
**dadurch gekennzeichnet, dass** die Steuereinheit konfiguriert ist, den Laser und/oder das Mittel zum Positionieren einer Folie so zu steuern, dass zwei aufeinanderfolgende Pulse des Lasers nicht auf eine gleiche Fläche der Folie abgestrahlt werden und mindestens zwei nicht aufeinanderfolgende Pulse des Lasers in einem zeitlichen Abstand, der größer ist als eine Pulspause zwischen zwei aufeinanderfolgenden Pulsen, auf die gleiche Fläche der Folie abgestrahlt werden.

9. Vorrichtung gemäß Anspruch 8, **dadurch gekennzeichnet, dass** die Steuereinheit konfiguriert ist, den Laser und/oder das Mittel zum Positionieren einer Folie so zu steuern, dass
i) mindestens fünf, weiter bevorzugt mindestens zehn, besonders bevorzugt mindestens 20, ganz besonders bevorzugt mindestens 35, insbesondere mindestens 50, nicht aufeinanderfolgende Pulse des Lasers in einem zeitlichen Abstand, der größer ist als eine Pulspause zwischen zwei aufeinanderfolgenden Pulsen, auf die gleiche Fläche der Folie abgestrahlt werden; und/oder
ii) der zeitliche Abstand zwischen den mindestens zwei nicht aufeinanderfolgenden Pulsen des Lasers auf die gleiche Fläche der Folie mindestens 10 ms, bevorzugt mindestens 25 ms, beträgt.

10. Vorrichtung gemäß einem der Ansprüche 8 oder 9, **dadurch gekennzeichnet, dass** die Steuereinheit konfiguriert ist, mindestens einen, bevorzugt alle, Parameter ausgewählt aus der Gruppe bestehend aus Pulswiederholrate des Lasers, Pulsdauer des Lasers, Pulsspotgröße des Lasers, Pulsspotform des Lasers und Relativbewegung zwischen Laser und Mittel zum Positionieren einer Folie, bevorzugt die Relativbewegung zwischen Laser und Mittel zum Positionieren einer Folie in Abhängigkeit von den anderen Parametern, einzustellen, sodass zwei aufeinanderfolgende Pulse des Lasers nicht auf eine gleiche Fläche der Folie abgestrahlt werden.

11. Vorrichtung gemäß einem der Ansprüche 8 bis 10, **dadurch gekennzeichnet, dass** die Steuereinheit konfiguriert ist,
i) eine Pulswiederholrate der Laserstrahlung des Lasers nach der Gleichung f ≤ (t_{Puls} + d_{Puls}/v)⁻¹ einzustellen und/oder im Bereich von 10 bis 100 kHz, bevorzugt um Bereich von 20 bis 80 kHz, besonders bevorzugt im Bereich von 40 bis 60 kHz, insbesondere auf 50 kHz, einzustellen; und/oder
ii) eine Pulsdauer der Laserstrahlung des Lasers nach der Gleichung t_{Puls} ≤ 1/f - d_{Puls}/v einzustellen und/oder im Bereich von 0,1 bis 10 µs, bevorzugt 0,2 bis 8 µs, besonders bevorzugt 0,3 bis 6 µs, insbesondere 0,5 bis 2 µs, einzustellen; und/oder
iii) einen Pulsspotdurchmesser der Laserstrahlung des Lasers nach der Gleichung d_{Puls} ≤ (1/f - t_{Puls})·v einzustellen und/oder im Bereich von 10 bis 100 µm, bevorzugt 20 bis 70 µm, besonders bevorzugt 40 bis 50 µm, insbesondere 45 µm, einzustellen; und/oder
iv) eine Relativbewegung zwischen dem Laser und dem Mittel zum Positionieren einer Folie nach der Gleichung v ≥ d_{Puls} / (1/f - t_{Puls}) einzustellen und/oder in einem Bereich von 2 bis 15 m/s, bevorzugt 3 bis 12 m/s, besonders bevorzugt 4 bis 10 m/s, einzustellen;
wobei gilt:
f: Pulswiederholrate [Hz];
t_{Puls}: Pulsdauer [s];
d_{Puls}: Durchmesser des Pulsspots [m];
v: Relativbewegung zwischen Laser und Mittel zum Positionieren einer Folie [m/s].

12. Vorrichtung gemäß einem der Ansprüche 8 bis 11, **dadurch gekennzeichnet, dass** die Steuereinheit konfiguriert ist, eine Relativbewegung zwischen dem Laser und dem Mittel zum Positionieren einer Folie durch Steuerung einer Bewegung des Lasers und/oder dem Mittel zum Positionieren einer Folie zu bewirken.

13. Vorrichtung gemäß einem der Ansprüche 8 bis 12, **dadurch gekennzeichnet, dass** auf dem Mittel zum Positionieren einer Folie eine Folie, die mindestens eine Schicht aufweist, die ein Metall enthält oder daraus besteht, angeordnet ist, wobei die Folie bevorzugt
i) eine Schicht oder mehrere Schichten enthält oder daraus besteht, die ein Metall mit einem Schmelzpunkt im Bereich von ≤ 200 °C enthält oder daraus besteht, wobei das Metall bevorzugt Lithium ist; und/oder
ii) eine weitere Schicht oder mehrere weitere Schichten enthält oder daraus besteht, die ein Material mit einem Schmelzpunkt im Bereich von >200 °C enthält oder daraus besteht, wobei das Material bevorzugt ausgewählt ist aus der Gruppe bestehend aus Nickel, Kupfer, Edelstahl, Kohlenstoff, Silizium, Polymer, Keramik und Kombinationen hiervon.

14. Vorrichtung gemäß einem der Ansprüche 8 bis 13, **dadurch gekennzeichnet, dass** der Laser
i) ein CW-Faserlaser ist, der in einem gepulsten Modus, bevorzugt im "single-sector-pulsed"-Modus, betrieben wird; und/oder
ii) dazu konfiguriert ist, Laserstrahlung mit Pulsen in Form einer Rechteckfunktion auszustrahlen; und/oder
iii) dazu konfiguriert ist, Laserstrahlung mit einer Wellenlänge im UV-Bereich, VIS-Bereich, NIR-Bereich oder IR-Bereich auszustrahlen, bevorzugt Laserstrahlung mit einer Wellenlänge im Bereich von 400 nm bis 1500 nm auszustrahlen, insbesondere Laserstrahlung mit einer Wellenlänge von 1070 nm auszustrahlen; und/oder
iv) dazu konfiguriert ist, Laserstrahlung auszustrahlen, dessen Strahlungsintensität im Bereich von 1·10⁷ W/cm² bis 1·10⁹ W/cm² liegt.

15. Folie, die ein Metall mit einem Schmelzpunkt von ≤ 200 °C, bevorzugt Lithium, enthält oder daraus besteht und eine Oberseitenfläche (1), eine Unterseitenfläche (2) und mindestens eine Laser-geschnittene Seitenfläche (3) aufweist, wobei die mindestens eine Seitenfläche (3) von der Oberseitenfläche (1) durch eine erste Schneidkante getrennt ist und von der Unterseitenfläche (2) durch eine zweite Schneidkante getrennt ist,
**dadurch gekennzeichnet, dass**
i) die Oberseitenfläche (1) in einem Bereich mit einer Entfernung von ≤ 100 µm, bevorzugt ≤ 50 µm, besonders bevorzugt ≤ 20 µm, zur ersten Schneidkante keine Erhebungen gegenüber einer planaren Fläche der Oberseitenfläche (1) aufweist oder Erhebungen mit einer Höhe von lediglich ≤ 100 µm, bevorzugt ≤ 50 µm, besonders bevorzugt ≤20 µm, gegenüber einer planaren Fläche der Oberseitenfläche (1) aufweist; und/oder
ii) die Unterseitenfläche (2) in einem Bereich mit einer Entfernung von ≤ 100 µm, bevorzugt ≤ 50 µm, besonders bevorzugt ≤ 20 µm, zur zweiten Schneidkante keine Erhebungen gegenüber einer planaren Fläche der Unterseitenfläche (2) aufweist oder Erhebungen mit einer Höhe von lediglich ≤ 100 µm, bevorzugt ≤ 50 µm, besonders bevorzugt ≤20 µm, gegenüber einer planaren Fläche der Oberseitenfläche (1) aufweist; und/oder
iii) die mindestens eine Seitenfläche (3) in einem Bereich mit einer Entfernung von ≤ 100 µm, bevorzugt ≤ 50 µm, besonders bevorzugt ≤ 20 µm, zur ersten Schneidkante und/oder in einem Bereich mit einer Entfernung von ≤ 100 µm, bevorzugt ≤ 50 µm, besonders bevorzugt ≤ 20 µm, zur zweiten Schneidkante keine Erhebungen gegenüber einer planaren Fläche der Seitenfläche (3) aufweist oder Erhebungen mit einer Höhe von lediglich ≤ 100 µm, bevorzugt ≤ 50 µm, besonders bevorzugt ≤20 µm, gegenüber einer planaren Fläche der Seitenfläche (3) aufweist.

## Claims

1. A method for cutting a foil comprising or consisting of at least one layer which comprises or consists of a metal, said method comprising the steps of
a) providing a means for positioning a foil;
b) positioning a foil comprising or consisting of at least one layer, which comprises or consists of a metal, by the means for positioning a foil;
c) providing a laser that is suitable for emitting pulsed laser radiation in the direction of the foil;
d) emitting pulsed laser radiation from the laser in the direction of the foil;
wherein the laser and/or the means for positioning a foil is/are controlled such that pulsed laser radiation, which the laser emits in the direction of the foil onto the foil, cuts through the at least one layer of the foil,
**characterized in that** the laser and/or the means for positioning a foil are controlled in such a way that two consecutive pulses of the laser are not emitted onto the same area of the foil and at least two non-consecutive pulses of the laser are emitted onto the same area of the foil at a time interval which is greater than a pulse pause between two consecutive pulses.

2. The method according to the preceding claim, **characterized in that** the laser and/or the means for positioning a foil are controlled, optionally via a control unit, in such a way that
i) at least five, preferably at least ten, particularly preferably at least 20, very particularly preferably at least 35, in particular at least 50, non-consecutive pulses of the laser are emitted onto the same area of the foil at a time interval which is greater than a pulse pause between two consecutive pulses; and/or
ii) the time interval between the at least two non-consecutive pulses of the laser on the same area of the foil is at least 10 ms, preferably at least 25 ms.

3. The method according to one of the preceding claims, **characterized in that** at least one, preferably all, parameters selected from the group consisting of pulse repetition rate of the laser, pulse duration of the laser, pulse spot size, pulse spot shape of the laser and relative movement between laser and means for positioning a foil, preferably the relative movement between laser and means for positioning a foil as a function of the other parameters, are adjusted, optionally via a control unit, so that two consecutive pulses of the laser are not emitted onto the same area of the foil.

4. The method according to one of the preceding claims, **characterized in that**, optionally via a control unit,
i) a pulse repetition rate of the laser radiation of the laser is set according to the equation f ≤ (tₚᵤₗₛₑ + dₚᵤₗₛₑ/v)⁻¹ and/or is set in the range from 10 to 100 kHz, preferably in the range from 20 to 80 kHz, particularly preferably in the range from 40 to 60 kHz, in particular to 50 kHz; and/or
ii) a pulse duration of the laser radiation of the laser is set according to the equation tₚᵤₗₛₑ ≤ 1/f - dₚᵤₗₛₑ/v and/or is set in the range from 0.1 to 10 µs, preferably 0.2 to 8 µs, particularly preferably 0.3 to 6 µs, especially 0.5 to 2 µs; and/or
iii) a pulse spot diameter of the laser radiation of the laser is set according to the equation dₚᵤₗₛₑ ≤ (1/f - tₚᵤₗₛₑ)·v and/or is set in the range from 10 to 100 µm, preferably 20 to 70 µm, particularly preferably 40 to 50 µm, especially 45 µm; and/or
iv) a relative movement between the laser and the means for positioning a foil is set according to the equation v ≥ dₚᵤₗₛₑ / (1/f - tₚᵤₗₛₑ) and/or is set in a range of 2 to 15 m/s, preferably 3 to 12 m/s, particularly preferably 4 to 10 m/s;
wherein:
f: pulse repetition rate [Hz];
tₚᵤₗₛₑ: pulse duration [s];
dₚᵤₗₛₑ: diameter of the pulse spot [m];
v: relative movement between laser and means for positioning a foil [m/s],

5. The method according to one of the preceding claims, **characterized in that** a relative movement between the laser and the means for positioning a foil is effected by controlling a movement of the laser and/or the means for positioning a foil, optionally controlled via a control unit.

6. The method according to one of the preceding claims, **characterized in that** the foil
i) comprises or consists of one or more layers which comprise or consist of a metal with a melting point in the range of ≤ 200°C, wherein the metal is preferably lithium; and/or
ii) comprises or consists of one or more further layers which comprise or consist of a material with a melting point in the range of > 200°C, wherein the material is preferably selected from the group consisting of nickel, copper, stainless steel, carbon, silicon, polymer, ceramic and combinations thereof.

7. The method according to one of the preceding claims, **characterized in that** the laser
i) is a CW fiber laser operating in a pulsed mode, preferably in single-sector pulsed mode; and/or
ii) emits laser radiation with pulses in the form of a rectangular function; and/or
iii) emits laser radiation with a wavelength in the UV range, VIS range, NIR range or IR range, preferably laser light with a wavelength in the range from 400 to 1500 nm, in particular laser radiation with a wavelength of 1070 nm; and/or
iv) emits laser radiation of which the radiation intensity is in the range from 1·10⁷ W/cm² to 1·10⁹ W/cm².

8. A device for cutting a foil comprising or consisting of at least one layer which comprises or consists of a metal, said device comprising
a) a means of positioning a foil;
b) a laser configured to emit pulsed laser radiation in the direction of a foil which is positioned by the foil positioning means and comprises or consists of at least one layer which comprises or consists of a metal;
c) a control unit which is communicatively connected to the laser and/or the means for positioning a foil;
wherein the control unit is configured to control the laser and/or the means for positioning a foil such that pulsed laser radiation, which the laser emits in the direction of a foil positioned by the means for positioning a foil, cuts through the at least one layer of the foil,
**characterized in that** the control unit is configured to control the laser and/or the means for positioning a foil in such a way that two consecutive pulses of the laser are not emitted onto the same area of the foil and at least two non-consecutive pulses of the laser are emitted onto the same area of the foil at a time interval which is greater than a pulse pause between two consecutive pulses.

9. The device according to claim 8, **characterized in that** the control unit is configured to control the laser and/or the means for positioning a foil in such a way that
i) at least five, further preferably at least ten, particularly preferably at least 20, very particularly preferably at least 35, in particular at least 50, non-consecutive pulses of the laser are emitted onto the same area of the foil at a time interval which is greater than a pulse pause between two consecutive pulses; and/or
ii) the time interval between the at least two non-consecutive pulses of the laser on the same area of the foil is at least 10 ms, preferably at least 25 ms.

10. The device according to one of claims 8 or 9, **characterized in that** the control unit is configured to adjust at least one, preferably all, parameters selected from the group consisting of pulse repetition rate of the laser, pulse duration of the laser, pulse spot size of the laser, pulse spot shape of the laser and relative movement between laser and means for positioning a foil, preferably the relative movement between laser and means for positioning a foil depending on the other parameters, so that two consecutive pulses of the laser are not emitted onto the same area of the foil.

11. The device according to any one of claims 8 to 10, **characterized in that** the control unit is configured
i) to set a pulse repetition rate of the laser radiation of the laser according to the equation f ≤ (tₚᵤₗₛₑ + dₚᵤₗₛₑ/v)⁻¹ and/or to set it in the range from 10 to 100 kHz, preferably in the range from 20 to 80 kHz, particularly preferably in the range from 40 to 60 kHz, in particular to 50 kHz; and/or
ii) to set a pulse duration of the laser radiation of the laser according to the equation tₚᵤₗₛₑ ≤ 1/f - dₚᵤₗₛₑ/v and/or to set it in the range from 0.1 to 10 µs, preferably 0.2 to 8 µs, particularly preferably 0.3 to 6 µs, especially 0.5 to 2 µs; and/or
iii) to set a pulse spot diameter of the laser radiation of the laser according to the equation dₚᵤₗₛₑ ≤ (1/f - tₚᵤₗₛₑ)·v and/or to set it in the range from 10 to 100 µm, preferably 20 to 70 µm, particularly preferably 40 to 50 µm, especially 45 µm; and/or
iv) to set a relative movement between the laser and the means for positioning a foil according to the equation v ≥ dₚᵤₗₛₑ / (1/f - tₚᵤₗₛₑ) and/or to set it in a range of 2 to 15 m/s, preferably 3 to 12 m/s, particularly preferably 4 to 10 m/s;
wherein:
f: pulse repetition rate [Hz];
tₚᵤₗₛₑ: pulse duration [s];
dₚᵤₗₛₑ: diameter of the pulse spot [m];
v: relative movement between laser and means for positioning a foil [m/s],

12. The device according to any one of claims 8 to 11, **characterized in that** the control unit is configured to effect a relative movement between the laser and the means for positioning a foil by controlling a movement of the laser and/or the means for positioning a foil.

13. The device according to any one of claims 8 to 12, **characterized in that** a foil comprising at least one layer which comprises or consists of a metal is arranged on the means for positioning a foil, wherein the foil preferably
i) comprises or consists of one or more layers which comprise or consist of a metal with a melting point in the range of ≤ 200°C, wherein the metal is preferably lithium; and/or
ii) comprises or consists of one or more further layers which comprise or consist of a material with a melting point in the range of > 200°C, wherein the material is preferably selected from the group consisting of nickel, copper, stainless steel, carbon, silicon, polymer, ceramic and combinations thereof.

14. The device according to any one of claims 8 to 13, **characterized in that** the laser
i) is a CW fiber laser operating in a pulsed mode, preferably in single-sector pulsed mode; and/or
ii) is configured to emit laser radiation with pulses in the form of a rectangular function; and/or
iii) is configured to emit laser radiation with a wavelength in the UV range, VIS range, NIR range or IR range, preferably laser light with a wavelength in the range from 400 to 1500 nm, in particular laser radiation with a wavelength of 1070 nm; and/or
iv) is configured to emit laser radiation of which the radiation intensity is in the range from 1·10⁷ W/cm² to 1·10⁹ W/cm².

15. A foil which comprises or consists of a metal with a melting point of ≤ 200°C, preferably lithium, and has a top surface (1), a bottom surface (2) and at least one laser-cut side surface (3), wherein the at least one side surface (3) is separated from the top surface (1) by a first cutting edge and is separated from the bottom surface (2) by a second cutting edge,
**characterized in that**
i) the top surface (1), in a region at a distance of ≤ 100 µm, preferably ≤ 50 µm, particularly preferably ≤ 20 µm, from the first cutting edge, has no elevations relative to a planar area of the top surface (1) or has elevations with a height of only ≤ 100 µm, preferably ≤ 50 µm, particularly preferably ≤ 20 µm, relative to a planar area of the top surface (1); and/or
ii) the underside surface (2), in a region at a distance of ≤ 100 µm, preferably ≤ 50 µm, particularly preferably ≤ 20 µm, from the second cutting edge, has no elevations relative to a planar area of the underside surface (2) or has elevations with a height of only ≤ 100 µm, preferably ≤ 50 µm, particularly preferably ≤ 20 µm, relative to a planar area of the top surface (1); and/or
iii) the at least one side surface (3), in a region at a distance of ≤ 100 µm, preferably ≤ 50 µm, particularly preferably ≤ 20 µm, from the first cutting edge and/or in a region at a distance of ≤ 100 µm, preferably ≤ 50 µm, particularly preferably ≤ 20 µm, from the second cutting edge, has no elevations relative to a planar area of the side surface (3) or has elevations with a height of only ≤ 100 µm, preferably ≤ 50 µm, particularly preferably ≤ 20 µm, relative to a planar area of the side surface (3).

## Revendications

1. Procédé de découpe d'un film qui présente, ou est constitué de, au moins une couche qui contient un métal ou en est constitué, comprenant les étapes consistant à
a) fournir un moyen permettant de positionner un film ;
b) positionner un film qui présente, ou est constitué de, au moins une couche qui contient un métal ou en est constitué, grâce au moyen permettant de positionner un film ;
c) fournir un laser convenant pour émettre un rayonnement laser pulsé en direction du film ;
d) émettre un rayonnement laser pulsé à partir du laser en direction du film ;
dans lequel le laser et/ou le moyen permettant de positionner un film est/sont commandé(s) de sorte que le rayonnement laser pulsé, que le laser en direction du film émet sur le film, découpe au moins une couche du film,
**caractérisé en ce que** le laser et/ou le moyen permettant de positionner un film est/sont commandé(s) de sorte que deux impulsions consécutives du laser ne sont pas émises sur une même surface du film et de sorte qu'au moins deux impulsions non consécutives du laser sont émises sur la même surface du film à un intervalle de temps supérieur à une pause entre deux impulsions consécutives.

2. Procédé selon la revendication précédente, **caractérisé en ce que** le laser et/ou le moyen permettant de positionner un film est/sont éventuellement commandé(s) par l'intermédiaire d'une unité de commande de sorte que
i) au moins cinq, de préférence au moins dix, particulièrement de préférence au moins 20, plus particulièrement de préférence au moins 35, en particulier au moins 50, impulsions non consécutives du laser sont émises sur la même surface du film à un intervalle de temps supérieur à une pause entre deux impulsions consécutives ; et/ou
ii) l'intervalle de temps entre les au moins deux impulsions non consécutives du laser sur la même surface du film est d'au moins 10 ms, de préférence d'au moins 25 ms.

3. Procédé selon l'une quelconque des revendications précédentes, **caractérisé en ce qu'**au moins un paramètre, de préférence tous les paramètres, choisi(s) dans le groupe constitué de la fréquence de répétition d'impulsion du laser, de la durée d'impulsion du laser, de la taille du spot d'impulsion, de la forme du spot d'impulsion du laser et du mouvement relatif entre le laser et le moyen permettant de positionner un film est/sont ajusté(s), le mouvement relatif entre le laser et le moyen permettant de positionner un film étant de préférence ajusté en fonction des autres paramètres, éventuellement par l'intermédiaire d'une unité de commande, de sorte que deux impulsions consécutives du laser ne sont pas émises sur une même surface du film.

4. Procédé selon l'une quelconque des revendications précédentes, **caractérisé en ce que**, éventuellement par l'intermédiaire d'une unité de commande,
i) une fréquence de répétition d'impulsion du rayonnement laser du laser est ajustée conformément à l'équation f ≤ (t_{Puls} + d_{Puls}/v)⁻¹ et/ou dans la plage comprise entre 10 et 100 kHz, de préférence dans la plage comprise entre 20 et 80 kHz, de manière particulièrement préférée dans la plage comprise entre 40 et 60 kHz, en particulier à 50 kHz ; et/ou
ii) une durée d'impulsion du rayonnement laser du laser est ajustée conformément à l'équation t_{Puls} ≤ 1/f - d_{Puls}/v et/ou dans la plage comprise entre 0,1 et 10 µs, de préférence comprise entre 0,2 et 8 µs, de manière particulièrement préférée comprise entre 0,3 et 6 µs, en particulier comprise entre 0,5 et 2 µs ; et/ou
iii) un diamètre de spot d'impulsion du rayonnement laser du laser est ajusté conformément à l'équation d_{Puls} ≤ (1/f - t_{Puls})·v et/ou dans la plage comprise entre 10 et 100 µm, de préférence comprise entre 20 et 70 µm, de manière particulièrement préférée comprise entre 40 et 50 µm, en particulier à 45 µm ; et/ou
iv) un mouvement relatif entre le laser et le moyen permettant de positionner un film est ajusté conformément à l'équation v ≥ d_{Puls}/(1/f - t_{Puls}) et/ou est ajusté dans une plage comprise entre 2 et 15 m/s, de préférence comprise entre 3 à 12 m/s, de manière particulièrement préférée comprise entre 4 à 10 m/s ;
avec :
f : fréquence de répétition d'impulsion [Hz] ;
t_{Puls} : durée d'impulsion [s] ;
d_{Puls} : diamètre du spot d'impulsion [m] ;
v : mouvement relatif entre le laser et le moyen permettant de positionner un film [m/s].

5. Procédé selon l'une quelconque des revendications précédentes, **caractérisé en ce qu'**un mouvement relatif entre le laser et le moyen permettant de positionner un film est provoqué grâce à la commande d'un mouvement du laser et/ou du moyen permettant de positionner un film, éventuellement de manière commandée par l'intermédiaire d'une unité de commande.

6. Procédé selon l'une quelconque des revendications précédentes, **caractérisé en ce que** le film
i) contient, ou est constitué de, une couche ou plusieurs couches qui contien(nen)t, ou est/sont constituée(s) de, un métal ayant un point de fusion dans la plage ≤ 200 °C, dans lequel le métal est de préférence du lithium ; et/ou
ii) contient, ou est constitué de, une couche supplémentaire ou plusieurs couches supplémentaires qui contien(nen)t, ou est/sont constituée(s) de, un matériau ayant un point de fusion dans la plage >200 °C, dans lequel le matériau est de préférence choisi dans le groupe constitué de nickel, cuivre, acier inoxydable, carbone, silicium, polymère, céramique et leurs combinaisons.

7. Procédé selon l'une quelconque des revendications précédentes, **caractérisé en ce que** le laser
i) est un laser à fibre à onde continue (CW) fonctionnant en mode pulsé, de préférence en mode « pulsé à un seul secteur » ; et/ou
ii) émet un rayonnement laser avec des impulsions sous la forme d'une fonction rectangulaire ; et/ou
iii) émet un rayonnement laser avec une longueur d'onde dans la plage UV, la plage VIS, la plage NIR ou la plage IR, de préférence une lumière laser avec une longueur d'onde dans la plage comprise entre 400 et 1500 nm, en particulier un rayonnement laser avec une longueur d'onde de 1070 nm ; et/ou
iv) émet un rayonnement laser dont l'intensité se situe dans la plage comprise entre 1·10⁷ W/cm² et 1·10⁹ W/cm².

8. Dispositif de découpe d'un film qui présente, ou est constitué de, au moins une couche qui contient un métal ou en est constitué, présentant
i) un moyen permettant de positionner un film ;
ii) un laser configuré pour émettre un rayonnement laser pulsé en direction d'un film positionné grâce au moyen permettant de positionner un film et qui présente, ou est constitué de, au moins une couche qui contient un métal ou en est constitué ;
iii) une unité de commande reliée, de manière à pouvoir communiquer, au laser et/ou au moyen permettant de positionner un film ;
dans lequel l'unité de commande est configurée pour commander le laser et/ou le moyen permettant de positionner un film de sorte que le rayonnement laser pulsé, que le laser émet en direction d'un film positionné grâce au moyen permettant de positionner un film, découpe la au moins une couche du film,
**caractérisé en ce que** l'unité de commande est configurée pour commander le laser et/ou le moyen permettant de positionner un film de sorte que deux impulsions consécutives du laser ne sont pas émises sur une même surface du film et de sorte qu'au moins deux impulsions non consécutives du laser sont émises sur la même surface du film à un intervalle de temps supérieur à une pause entre deux impulsions consécutives.

9. Dispositif selon la revendication 8, **caractérisé en ce que** l'unité de commande est configurée pour commander le laser et/ou le moyen permettant de positionner un film de sorte que
i) au moins cinq, de préférence au moins dix, de manière particulièrement préférée au moins 20, de manière particulièrement préférée au moins 35, en particulier au moins 50, impulsions non consécutives du laser sont émises sur la même surface du film à un intervalle de temps supérieur à une pause entre deux impulsions consécutives ; et/ou
ii) l'intervalle de temps entre les au moins deux impulsions non consécutives du laser sur la même surface du film est d'au moins 10 ms, de préférence d'au moins 25 ms.

10. Dispositif selon l'une quelconque des revendications 8 ou 9, **caractérisé en ce que** l'unité de commande est configurée pour ajuster au moins un paramètre, de préférence tous les paramètres, sélectionné(s) dans le groupe constitué de la fréquence de répétition d'impulsion du laser, de la durée d'impulsion du laser, de la taille du spot d'impulsion du laser, de la forme du spot d'impulsion du laser et du mouvement relatif entre le laser et le moyen permettant de positionner un film, le mouvement relatif entre le laser et le moyen permettant de positionner un film étant de préférence ajusté en fonction des autres paramètres, de sorte que deux impulsions consécutives du laser ne sont pas émises sur une même surface du film.

11. Dispositif selon l'une quelconque des revendications 8 à 10, **caractérisé en ce que** l'unité de commande est configurée pour
i) ajuster une fréquence de répétition d'impulsion du rayonnement laser du laser conformément à l'équation f ≤ (t_{Puls} + d_{Puls}/v)⁻¹ et/ou dans la plage comprise entre 10 et 100 kHz, de préférence dans la plage comprise entre 20 et 80 kHz, de manière particulièrement préférée dans la plage comprise entre 40 et 60 kHz, en particulier à 50 kHz ; et/ou
ii) ajuster une durée d'impulsion du rayonnement laser du laser conformément à l'équation t_{Puls} ≤ 1/f - d_{Puls}/v et/ou dans la plage comprise entre 0,1 et 10 µs, de préférence comprise entre 0,2 et 8 µs, de manière particulièrement préférée comprise entre 0,3 et 6 µs, en particulier comprise entre 0,5 et 2 µs ; et/ou
iii) ajuster un diamètre de spot d'impulsion du rayonnement laser du laser conformément à l'équation d_{Puls} ≤ (1/f - t_{Puls})·v et/ou dans la plage comprise entre 10 et 100 µm, de préférence comprise entre 20 et 70 µm, de manière particulièrement préférée comprise entre 40 et 50 µm, en particulier à 45 µm ; et/ou
iv) ajuster un mouvement relatif entre le laser et le moyen permettant de positionner un film conformément à l'équation v ≥ d_{Puls}/ (1/f - t_{Puls}) et/ou dans la plage comprise entre 2 et 15 m/s, de préférence comprise entre 3 et 12 m/s, de manière particulièrement préférée comprise entre 4 et 10 m/s ;
avec :
f : fréquence de répétition d'impulsion [Hz] ;
t_{Puls} : durée d'impulsion [s] ;
d_{Puls} : diamètre du spot d'impulsion [m] ;
v : mouvement relatif entre le laser et le moyen permettant de positionner un film [m/s].

12. Dispositif selon l'une quelconque des revendications 8 à 11, **caractérisé en ce que** l'unité de commande est configurée pour provoquer un mouvement relatif entre le laser et le moyen permettant de positionner un film grâce à la commande d'un mouvement du laser et/ou du moyen permettant de positionner un film.

13. Dispositif selon l'une quelconque des revendications 8 à 12, **caractérisé en ce qu'**un film présentant au moins une couche contenant un métal ou en étant constitué est agencé sur le moyen permettant de positionner un film, dans lequel le film, de préférence
i) contient, ou est constitué de, une couche ou plusieurs couches qui contien(nen)t, ou est/sont constituée(s) de, un métal ayant un point de fusion dans la plage ≤ 200 °C, dans lequel le métal est de préférence du lithium ; et/ou
ii) contient, ou est constitué de, une couche supplémentaire ou plusieurs couches supplémentaires qui contien(nen)t, ou est/sont constituée(s) de, un matériau ayant un point de fusion dans la plage >200 °C, dans lequel le matériau est de préférence choisi dans le groupe constitué de nickel, cuivre, acier inoxydable, carbone, silicium, polymère, céramique et leurs combinaisons.

14. Dispositif selon l'une quelconque des revendications 8 à 13, **caractérisé en ce que** le laser
i) est un laser à fibre à onde continue (CW) fonctionnant en mode pulsé, de préférence en mode « pulsé à un seul secteur » ; et/ou
ii) est configuré pour émettre un rayonnement laser avec des impulsions sous la forme d'une fonction rectangulaire ; et/ou
iii) est configuré pour émettre un rayonnement laser avec une longueur d'onde dans la plage UV, la plage VIS, la plage NIR ou la plage IR, de préférence un rayonnement laser avec une longueur d'onde dans la plage comprise entre 400 et 1500 nm, en particulier un rayonnement laser avec une longueur d'onde de 1070 nm ; et/ou
iv) est configuré pour émettre un rayonnement laser dont l'intensité de rayonnement est comprise entre 1·10⁷ W/cm² et 1·10⁹ W/cm².

15. Film qui contient, ou est constitué de, un métal ayant un point de fusion ≤ 200 °C, de préférence du lithium, et qui présente une surface supérieure (1), une surface inférieure (2) et au moins une surface latérale (3) découpée au laser, dans lequel la au moins une surface latérale (3) est séparée de la surface supérieure (1) par un premier bord de coupe et est séparée de la surface inférieure (2) par un second bord de coupe,
**caractérisé en ce que** :
i) la surface supérieure (1), dans une région présentant par rapport au premier bord de coupe un éloignement ≤ 100 µm, de préférence ≤ 50 µm, de manière particulièrement préférée ≤ 20 µm, ne présente aucune surélévation par rapport à une surface plane de la surface supérieure (1) ou présente des surélévations d'une hauteur seulement ≤ 100 µm, de préférence ≤ 50 µm, de manière particulièrement préférée ≤ 20 µm, par rapport à une surface plane de la surface supérieure (1) ; et/ou
ii) la surface inférieure (2), dans une région présentant par rapport au second bord de coupe un éloignement ≤ 100 µm, de préférence ≤ 50 µm, de manière particulièrement préférée ≤ 20 µm, ne présente aucune surélévation par rapport à une surface plane de la surface inférieure (2) ou présente des surélévations d'une hauteur seulement ≤ 100 µm, de préférence ≤ 50 µm, de manière particulièrement préférée ≤ 20 µm, par rapport à une surface plane de la surface supérieure (1) ; et/ou
iii) la au moins une surface latérale (3), dans une région présentant par rapport au premier bord de coupe un éloignement ≤ 100 µm, de préférence ≤ 50 µm, de manière particulièrement préférée ≤ 20 µm, et/ou dans une région présentant par rapport au second bord de coupe un éloignement ≤ 100 µm, de préférence ≤ 50 µm, de manière particulièrement préférée ≤ 20 µm, ne présente aucune surélévation par rapport à une surface plane de la surface latérale (3) ou présente des surélévations d'une hauteur seulement ≤ 100 µm, de préférence ≤ 50 µm, de manière particulièrement préférée ≤ 20 µm, par rapport à une surface plane de la surface latérale (3).
